Europäisches Patentamt

European Patent Office

Office européen des brevets

(11) Numéro de publication: **0 416 974 A1**

# (12) DEMANDE DE BREVET EUROPEEN

(21) Numéro de dépôt: 90402324.9

(22) Date de dépôt: 21.08.90

(51) Int. Cl.⁵: **A47J 31/54**, A47J 31/00, B60N 3/16

(30) Priorité: 24.08.89 FR 8911218

(43) Date de publication de la demande:
**13.03.91 Bulletin 91/11**

(84) Etats contractants désignés:
**AT BE CH DE DK ES GB GR IT LI LU NL SE**

(71) Demandeur: **Retailleau, Jean-Luc**
**01, rue de Conti**
**F-95290 L'Isle-Adam(FR)**

(72) Inventeur: **Retailleau, Jean-Luc**
**01, rue de Conti**
**F-95290 L'Isle-Adam(FR)**

(74) Mandataire: **Lerner, François et al**
**LERNER & BRULLE S.C.P. 5, rue Jules**
**Lefèbvre**
**F-75009 Paris(FR)**

(54) **Distributeur de liquide à chauffage électrique, en particulier pour la préparation du café.**

㊐ L'invention concerne un distributeur de liquide dans lequel ledit liquide contenu dans un réservoir est chauffé par une résistance électrique disposée à la base d'un conduit terminé par un bec verseur par lequel le liquide s'écoule.

Selon l'invention, la résistance électrique (46) est enfermée dans une chambre (30) reliée à la base du conduit (36) et alimentée par le réservoir (20) à travers un clapet (42) interdisant la remontée de liquide vers le réservoir lorsque la résistance chauffe le liquide dans ladite chambre, la résistance électrique (46) consistant en un fil métallique non revêtu d'isolant et alimenté en basse tension.

L'invention s'applique particulièrement à la préparation de boissons chaudes, tel que du café.

FIG.1

L'invention a essentiellement pour objet un distributeur de liquide à chauffage électrique dans lequel le liquide contenu dans un réservoir est chauffé par une résistance électrique disposée à la base d'un conduit sensiblement vertical terminé par un bec verseur recourbé par lequel il s'écoule sous l'action de la pression.

Le distributeur objet de l'invention fonctionne suivant le principe des cafetières ménagères dans lesquelles le liquide contenu dans un réservoir est chauffé pour alimenter un filtre contenant une poudre de café.

Les appareils connus réalisent le chauffage de la totalité de l'eau contenue dans le réservoir, ils sont alimentés par le secteur électrique et présentent une inertie relativement élevée.

L'invention vise particulièrement un appareil conçu pour la préparation de boissons chaudes dans un véhicule, voiture, camion, caravane, bateau, avion, etc...; à cet effet, il est conçu de façon à être compact et à consommer très peu d'énergie celle-ci provenant généralement de la batterie du véhicule.

Le distributeur objet de l'invention est caractérisé en ce que la résistance électrique est enfermée dans une chambre reliée à la base du conduit et alimentée par le réservoir à travers un clapet interdisant la remontée de liquide vers ledit réservoir lorsque la résistance chauffe le liquide dans ladite chambre, ladite résistance électrique consistant en un fil métallique, tel que de l'acier inox ou analogue, non revêtu d'isolant et alimenté en basse tension.

Selon une autre caractéristique, le fil métallique de la résistance est bobiné en une spirale dont les spires extrêmes sont reliées à deux bornes d'alimentation, ces dernières étant prolongées chacune par une corne polaire en fil d'un diamètre supérieur à celui des spires, lesdites cornes s'étendant sensiblement perpendiculairement à l'axe de la spirale.

Grâce à cette caractéristique la corrosion de la spirale due aux effets d'électrolyse entre spires est sensiblement réduite et il est possible d'obtenir une durée de vie de la résistance chauffante décuplée par rapport à ce qui était obtenu sans l'existence des cornes polaires.

Selon encore une autre caractéristique de l'invention le circuit électrique d'alimentation de la résistance comporte un commutateur auquel sont associés des moyens interdisant la fermeture dudit commutateur en cas de manque de liquide dans le réservoir. Lesdits moyens interdisant la fermeture du commutateur comportent un détecteur de présence de liquide dans le réservoir associé à un transistor qui commande un relais d'actionnement du commutateur.

Grâce à de telles caractéristiques il est possible d'obtenir un distributeur susceptible d'alimenter en eau un gobelet qui soit de faible encombrement et de consommation électrique réduite, la résistance étant protégée contre la corrosion.

L'invention sera mieux comprise à la lecture de la description qui va suivre et se réfère aux dessins annexés dans lesquels :

- la figure 1 est une vue en coupe d'un distributeur de liquide selon l'invention ;
- la figure 2 est une vue en perspective du dispositif de la figure 1 et ;
- la figure 3 montre le schéma électrique d'alimentation du distributeur selon l'invention ;
- la figure 4 montre en perspective la résistance chauffante et ses cornes polaires montées sur un bouchon coopérant avec le cylindre formant chaudière ;
- et la figure 5 montre une variante de réalisation du clapet régulateur de débit pouvant être utilisé sur le distributeur de la figure 1.

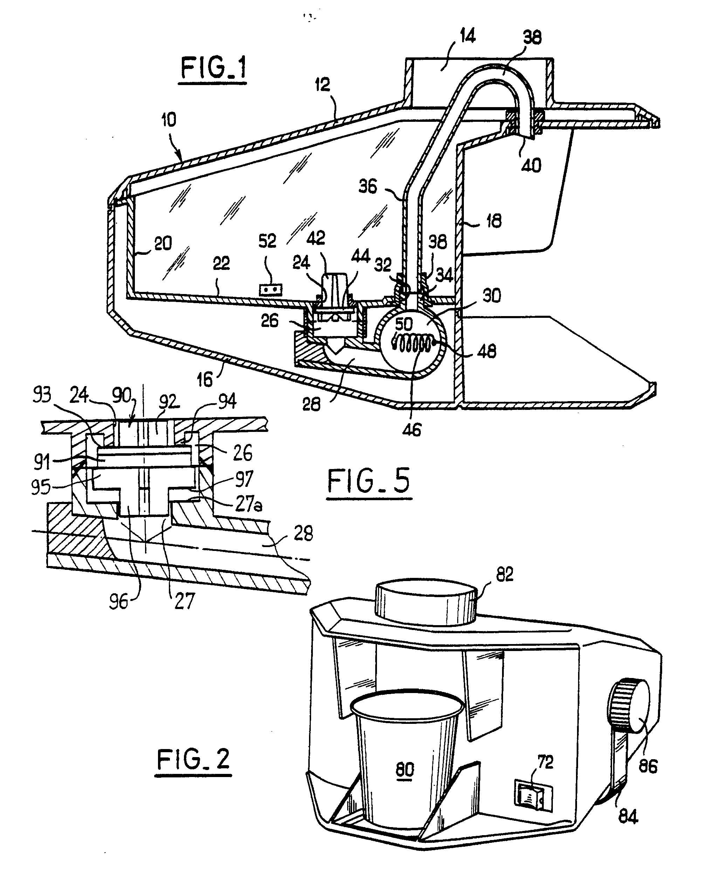

Si l'on considère la figure 1, le distributeur 10 se présente sous la forme d'un boîtier réalisé par exemple en matière plastique, comportant un couvercle 12 muni d'une ouverture 14 raccordé à un fond 16, le couvercle 12 et le fond 16 étant reliés par des parois latérales et par une cloison sensiblement verticale 18. Dans le boîtier se trouve un bac formant réservoir 20 prévu pour recevoir le liquide à distribuer qui est introduit par l'ouverture 14. Le bac formant réservoir 20 comporte une paroi formant fond 22 dans laquelle sont prévus deux orifices : d'une part un orifice 24 donnant accès à un puits 26 débouchant à sa partie inférieure dans un conduit 28 relié à une chambre 30 qui se présente sous la forme d'un cylindre de section circulaire creux à axe horizontal et d'autre part un orifice 32 à travers lequel passe une tubulure 34 disposée à la partie supérieure de la chambre 30 à laquelle est relié un conduit ou tube vertical 36, un embout d'étanchéité 38 assurant l'étanchéité entre la tubulure 34, la partie inférieure du conduit 36 et le fond 22 du réservoir. Le conduit 36 se prolonge par une partie coudée 38 et se termine par un bec verseur 40 qui se trouve à un niveau supérieur au niveau maximum de l'eau dans le réservoir. On remarquera que dans leur ensemble, les parties 26, 28 ; 30 assemblées présenteront de préférence la forme générale d'une pipe comprenant, en tant que foyer, la chambre 30 avec en partie supérieure sa cheminée d'évacuation 34 et, débouchant latéralement, le conduit 28 formant "tuyau de pipe", normalement légèrement incliné par rapport à l'horizontale en descendant vers le foyer 30 à partir de son côté où débouche le puits 26 de retenue du flotteur dont le volume est comparable à celui de la chambre 30.

Dans l'orifice 24 du fond 22 du réservoir est monté coulissant un clapet 42 comportant une bride annulaire 44 susceptible de venir coopérer avec la partie inférieure du fond 22 lorsque le réservoir 20 et la chambre 30 sont remplis d'eau ledit clapet 42 ayant une densité inférieure à celle de l'eau.

On a montré schématiquement à la figure 1, la résistance électrique de chauffage du distributeur 46 qui se présente sous la forme d'une spirale de fils, en acier inox ou analogue, non revêtu d'isolant et on a montré en 48 et 50 les bornes d'alimentation de la résistance 46.

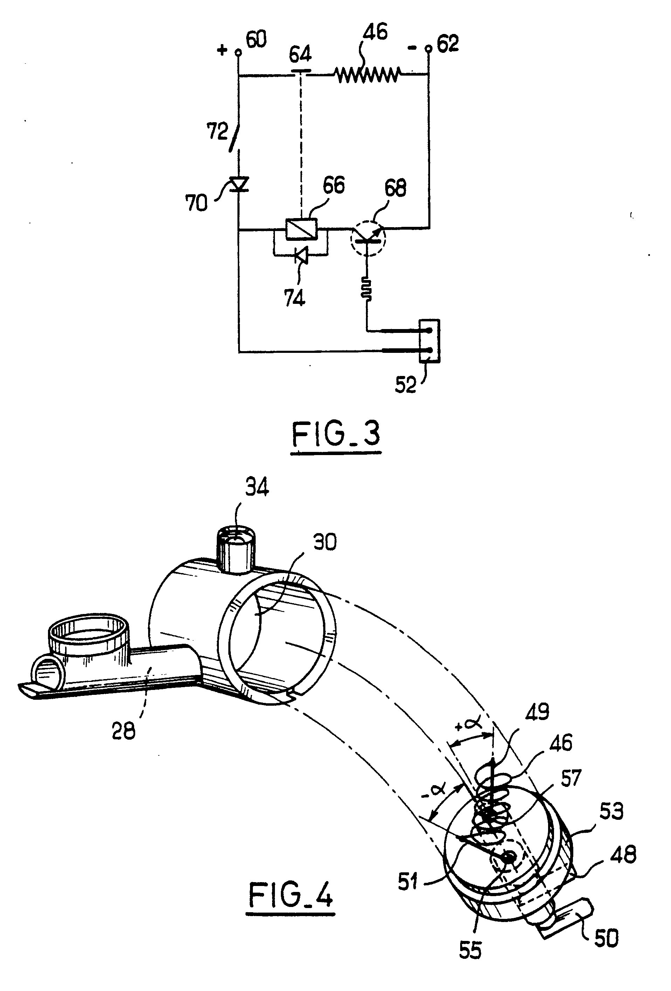

La figure 4 montre en perspective le bouchon 53 d'alimentation de la résistance 46 constituée par une spirale s'étendant selon un axe perpendiculaire audit bouchon qui coopère de façon étanche avec la chambre 30 formant chaudière. Dans l'exemple représenté la spirale 46 s'étend axialement entre deux cornes polaires 49, 51 auxquelles elle est reliée par ses spires extremes, ces cornes formant électrodes en permettant de déplacer la zone d'électrolyse qui, en l'absence de telles cornes, se situerait à l'endroit de la résistance 46, entre les spires de cette dernière.

Dans la réalisation illustrée, les cornes polaires en question s'étendent dans des plans sensiblement perpendiculaire à l'axe de la spirale et en l'espèce se prolongent chacune légèrement au-delà du point de jonction spirale-corne. Vers leur extrémité opposée, sur le bouchon 53, ces mêmes cornes sont connectées à deux pastilles 55, 57, auxquelles sont électriquement reliées, à travers le bouchon, les deux bornes 48, 50 de branchement de la résistance. Bien entendu des moyens d'étanchéité sont prévus.

Dans un mode de réalisation qui a donné toute satisfaction au point de vue chauffage et au point de vue résistance à la corrosion due aux effets électrochimiques, les cornes polaires sont réalisées dans un fil légèrement plus gros que le fil de la spirale. Elles ont par exemple un diamètre de 0,8 mm pour une section du fil de la spirale de 0,6 mm, les pastilles de connexion 55, 57 présentant alors un diamètre d'environ 4 mm.

Lors de la fabrication de l'appareil, il a même été remarqué que décaler angulairement, chacune dans leur plan, les deux cornes 49, 51 à contre-sens l'une de l'autre (l'angle + α pour la corne 49 et - α pour la corne 51, figure 4), favorise le montage et l'efficacité de l'appareil.

Une telle disposition des cornes ajoutée à la spirale classique permet de décupler la durée de vie de la résistance chauffante.

On a également montré en 52, au voisinage du fond 22 du réservoir 20, un détecteur de niveau bas dont la fonction sera décrite ci-après.

On décrira maintenant le circuit électrique d'alimentation de la résistance 46 en se référant au schéma électrique de la figure 3.

La résistance 46 est susceptible d'être alimentée par une batterie reliée à des bornes 60 et 62 avec interposition d'un commutateur 64. Le commutateur 64 est commandé par un relais du type électromagnétique 66 qui en provoque la fermeture lorsqu'il est excité par la fermeture d'un circuit comportant le détecteur de niveau 52, un transistor 68, une diode 70 et un interrupteur général de commande du distributeur 72 du type à bouton-poussoir. Le détecteur de niveau 52 peut être du type comportant deux électrodes qui, lorsqu'elles sont plongées dans l'eau, ferment le circuit comportant le transistor, le relais 66 et la diode 70 qui est une diode de polarisation, une diode de protection 74 de l'interrupteur 13 étant prévue aux bornes du relais 66.

On décrira maintenant le fonctionnement du distributeur qui vient d'être décrit en se référant aux figures 1 et 3. Lors du remplissage en eau du réservoir 20, le clapet 42 reste au fond du puits 26 jusqu'à ce que la chambre 30 ait été remplie d'eau. On notera que la capacité de la chambre est réduite, son volume étant très nettement inférieur à celui du gobelet, par exemple dans un rapport de 1 à 5 environ, un rapport décuple pouvant être retenu entre le volume de la chambre 30 et celui du réservoir 20.

Après ce remplissage de la chambre, si l'on ferme l'interrupteur 72 à bouton-poussoir, la résistance 46 chauffe l'eau qui y est contenue et plaque le clapet 42 contre le siège constitué par le bord inférieur de l'orifice 24, ceci grâce à la bride annulaire 44. L'eau en expansion dans la chambre 30 et le conduit 36 se trouve éjectée par le bec verseur 40 vers le gobelet disposé à l'aplomb de ce dernier. Une fois évacuée l'eau contenue dans la chambre 30 et le conduit 36, le clapet 42 tombe vers le fond du puits 26 et assure la réalimentation en eau de la chambre 30. Si l'on maintient fermé le bouton-poussoir 72, une nouvelle opération de chauffage se produit et il est possible de remplir le gobelet se trouvant en-dessous du bec verseur 40 jusqu'à son remplissage partiel ou total.

On a montré à la figure 2 une vue en perspective d'un distributeur selon l'invention. Sur cette figure, on a désigné par la référence 80 le gobelet et la référence 82 un couvercle venant se placer au-dessus de l'ouverture 14 de remplissage du réservoir 20. On trouve également sur cette figure le bouton poussoir 72. On peut voir également un étrier 84 dont les pattes verticales enserrent le distributeur qui est monté articulé sur ledit étrier avec possibilité de blocage au moyen d'écrous à tête moletée 86, une telle disposition de suspension permettant l'installation du distributeur dans un véhicule.

Quant à la figure 5, elle illustre une variante de réalisation du clapet 42 de la figure 1. Ce clapet flottant repéré 90 est formé en une seule pièce en matière plastique telle que du polypropylène. Il est conformé pour être logé dans le puits 26 de l'appareil et comprend un corps central 91 cylindrique de section circulaire surmonté dans son axe vertical de cylindre d'une première croix 92, à quatre branches, de moindre section propre à s'engager à travers l'orifice 24 en position haute de fermeture du clapet pour y guider ce dernier ; un épaulement périphérique 93 venant alors coopérer avec un rebord formant siège 94 de l'orifice 24. Du côté opposé, le corps 91 est prolongé par une double croix 95, 96 étagée de manière que la croix inférieur 96 de moindre section assure le guidage du clapet dans l'orifice 27 ménagé à la partie inférieure de la chambre 26 pour la communication avec le conduit 28, un épaulement périphérique 97 formé à l'endroit de la liaison avec changement de section des croix 95, 96 venant coopérer avec le bord 27a (formant siège bas pour le clapet) de l'orifice 27.

## Revendications

1. Distributeur de liquide à chauffage électrique dans lequel le liquide contenu dans un réservoir (20) est chauffé par une résistance électrique (46) enfermée dans une chambre (30) reliée à la base d'un tube (36) sensiblement vertical terminé par un bec verseur recourbé par lequel ledit liquide s'écoule par effet de pression, ladite chambre étant alimentée par le réservoir à travers un clapet (42) interdisant la remontée de liquide vers le réservoir lorsque la résistance chauffe le liquide dans ladite chambre, ladite résistance électrique consistant en un fil métallique non revêtu d'isolant et alimenté en basse tension courant continu.

2. Distributeur selon la revendication 1 caractérisé en ce que ledit fil métallique de la résistance (46) est relié à des électrodes (49, 51) disposées dans ladite chambre (30) pour limiter les effets, sur la résistance, d'une zone d'électrolyse qui se forme au sein du liquide dans ladite chambre lors de l'alimentation en courant électrique de cette résistance.

3. Distributeur selon la revendication 2 caractérisé en ce que le fil métallique de la résistance (46) est bobiné en une spirale dont les spires extrêmes sont reliées à deux cornes polaires (49, 51) constituant lesdites électrodes, lesquelles sont connectées chacune à une borne (48, 50) d'alimentation de la résistance, lesdites cornes polaires se présentant sous la forme d'un fil d'un diamètre supérieur à celui des spires et s'étendant sensiblement perpendiculairement à l'axe de la spirale.

4. Distributeur selon la revendication 3 caractérisé en ce que lesdites cornes polaires (49, 51) sont décalées angulairement, chacune dans un plan, à contre-sens l'une de l'autre.

5. Distributeur selon l'une quelconque des revendications 1 à 4 caractérisé en ce que la résistance (46) est alimentée par un circuit électrique comportant un commutateur (64) auquel sont associés des moyens (52, 68) pour interdire la fermeture dudit commutateur en cas de manque de liquide dans le réservoir (20).

6. Distributeur selon l'une quelconque des revendications précédentes caractérisé en ce que la chambre (30) où est disposée la résistance (46) est un cylindre creux à axe horizontal et ladite résistance est bobinée en une spirale dont l'axe est perpendiculaire à celui dudit cylindre.

7. Distributeur selon l'une quelconque des revendications précédentes caractérisé en ce que le volume de ladite chambre (30) est inférieur au volume d'un gobelet (80) à remplir disposé sous ledit bec verseur (40).

8. Distributeur selon l'une quelconque des revendications précédentes caractérisé en ce que ladite chambre (30) est reliée au réservoir (20) par un conduit (28) présentant une pente normalement descendante vers ledit réservoir, ce conduit étant relié à la base d'un puits (26) communiquant avec le réservoir et où est logé ledit clapet (42), ladite chambre (30) et le conduit (28) présentant extérieurement la forme d'une pipe comportant un foyer formé par ladite chambre (30) et un tuyau de pipe formé par ledit conduit (28).

FIG.1

FIG.5

FIG.2

EP 0 416 974 A1

FIG_3

FIG_4

6

## Office européen des brevets

# RAPPORT DE RECHERCHE EUROPEENNE

Numéro de la demande

**EP 90 40 2324**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-2 926 234 (PALMER) <br> * colonne 1, ligne 65 - colonne 3, ligne 32; figure 1 * <br> – – – | 1 | A 47 J 31.54 <br> A 47 J 31/00 <br> B 60 N 3/16 |
| Y,A | BE-A-5 243 26 (HERZOG) <br> * page 1, ligne 24 - page 4, ligne 11; figures 1, 2 * <br> – – – | 1,2,3 | |
| A | DE-A-3 532 058 (ELEKTRO-GROSSHANDLUNG THEO-DOR & CO) <br> * colonne 2, ligne 8 - colonne 3, ligne 67; figure * <br> – – – | 5 | |
| A | FR-A-2 105 400 (DEBRECZENY) <br> – – – – – | | |

**DOMAINES TECHNIQUES RECHERCHES (Int. Cl.5)**

A 47 J
B 60 N

Le présent rapport de recherche a été établi pour toutes les revendications

| Lieu de la recherche | Date d'achèvement de la recherche | Examinateur |
|---|---|---|
| La Haye | 21 décembre 90 | BODART P.A. |